(19) **Europäisches Patentamt**
**European Patent Office**
**Office européen des brevets**

(11) **EP 2 197 293 B1**

(12) **EUROPEAN PATENT SPECIFICATION**

(45) Date of publication and mention
of the grant of the patent:
**05.03.2014 Bulletin 2014/10**

(51) Int Cl.:
***A23K 1/00*** (2006.01)

(21) Application number: **08835447.7**

(86) International application number:
**PCT/US2008/011266**

(22) Date of filing: **29.09.2008**

(87) International publication number:
**WO 2009/045369 (09.04.2009 Gazette 2009/15)**

(54) **GRANULAR FEED SUPPLEMENT**

NAHRUNGSERGÄNZUNG IN GRANULATFORM

COMPLÉMENT ALIMENTAIRE GRANULAIRE POUR ANIMAUX

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.10.2007 US 960613 P**

(43) Date of publication of application:
**23.06.2010 Bulletin 2010/25**

(73) Proprietor: **H.J. Baker & Bro., Inc.**
**Westport, CT 06880-6425 (US)**

(72) Inventors:
• **GATELY, Stephen F.**
**Atlanta**
**Georgia 30319 (US)**

• **WRIGHT, Danny R.**
**Buford**
**Georgia 30519 (US)**
• **VALAGENE, Richard J.**
**Republic**
**Missouri 65738 (US)**

(74) Representative: **Le Coupanec, Pascale A.M.P.**
**Cabinet Nony**
**3, rue de Penthièvre**
**75008 Paris (FR)**

(56) References cited:
**EP-A- 1 741 347    US-A- 3 541 204**
**US-A- 5 720 970**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

This disclosure is generally directed to granular feed supplements for ruminant animals. In particular, this disclosure provides a granular feed supplement for a ruminant in which a physiologically active substance is stable in the rumen of a ruminant animal and is digested and absorbed in the abomasum and subsequent digestive tract. Also disclosed are a method of making and a method of using the granular feed supplement.

Ruminant animals are mammals of the suborder Ruminantia that have a stomach divided into four morphologically distinct compartments: the rumen, the reticulum, the omasum, and the abomasum. The rumen and the reticulum are derived from the terminal portion of the esophagus, and only the omasum and the abomasum are considered to be a genuine stomach. Bacteria present in the rumen enable ruminants to digest cellulosic materials such as grass. Conventional digestion occurs in the abomasum, sometimes called the "true stomach." Well-known ruminants include cattle, sheep, and goats.

The rumen, which is essentially a continuous fermenter, supports a variety of micro-organisms under neutral conditions which attack and digest much of the ingested feedstuffs consumed by a ruminant as part of their normal life cycle. Ingested protein material is broken down in the rumen to soluble peptides and amino acids that are used as nutrients by the microorganisms. A stream of ingesta, rich in microbial cells, passes out of the rumen into the omasum. The function of the omasum is to separate liquids and solids. Much of the liquid reenters the rumen while the remainder of the material enters the abomasum. Digestion and absorption then proceed in the abomasum in a manner similar to that found in monogastrics. Enzymes secreted into the lumen of the abomasum digest much of the material, including the microbial cells. The digested microbial cells provide protein and amino acids to the ruminant.

The microbial action of the rumen has the great advantage of being able to convert many feed components which have no direct nutritive value for the host into products which can be assimilated and utilized by the host. For example, urea may be converted to microbial protein which subsequently may be digested and utilized by the host animal. Cellulose may be converted to a mixture of volatile fatty acids which can serve as a source of energy to the host.

Unfortunately, this microbial action also presents certain disadvantages. For instance, soluble proteins of high nutritive value may be broken down and digested in the rumen and in part resynthesized into microbial protein of lower nutritive value. Amino acids are also chemically changed by the rumen microorganisms, which convert amino acids to carbon dioxide, volatile fatty acids, and ammonia.

All proteins present in animals are constituted by combinations of more than 20 different amino acids. Among these, ten "essential" amino acids are not adequately synthesized in the animal body, and the animals must take them in. When essential amino acids are lacking in the ruminant diet the ruminant's health, milk production, etc., are all negatively affected.

It is common practice in ruminant production to supply biologically active substances in the daily diet of the animals in order to improve their conditions of health and their productive performance. Active substances of interest include amino acids, vitamins, enzymes, nutrients such as proteins and carbohydrates, probiotic micro-organisms, prebiotic foods, mineral salts, choline, etc. Some of these substances are already normally present in foods used for feeding animals. Sometimes the amount of essential active substances present in the diet may be insufficient or inadequate to cope with states of deficiency or situations of high productivity. Therefore, it is desirable to carefully formulate or supplement the daily diet of ruminant animals in order to address these concerns.

However, when physiologically active substances such as amino acids and proteins are orally fed, a substantial part of the substance (e.g., proteins, amino acids, etc.) are decomposed by microorganisms in the rumen, making it difficult or impossible for the animal to effectively utilize all of the administered proteins and amino acids contained in feed, etc. Thus, essential amino acids are destroyed and rendered unavailable for animal production. Animal production is limited by the supply of individual essential amino acids that escape, or bypass, the rumen intact and reach the lower gastrointestinal tract where they can be absorbed and become available for animal production.

Accordingly, it is important to pass the biologically active substances through the rumen without decomposition by microorganisms to allow the biologically active substances to be effectively digested and absorbed in the abomasum and subsequent digestive tract. Consequently, a great deal of effort has been expended towards providing a bioactive substance in a form which will pass through the rumen essentially unaltered, yet undergo disintegration and absorption in the abomasum.

There are numerous methodologies that are designed to increase the amount of a nutrient that passes through the rumen without being degraded by the rumen microflora, thereby delivering a larger portion of that nutrient to the lower gastrointestinal tract, including: heat and chemical treatment, encapsulation and coating, use of amino acid analogs, and polymeric compounds of amino acids.

For instance, it has been proposed to coat ruminant animal feed additives containing biologically active substances with protective substances, such as fatty acids, hardened animal oils, and hardened vegetable oils. However, particles coated with these fats and oils are stable not only in the rumen, but also in the abomasum and subsequent digestive tract, making the biologically active substances difficult to be released in the abomasum and subsequent digestive tract.

Another method proposed utilizes the difference in pH between the rumen and the abomasum by coating with a polymer that is insoluble in the environment of the rumen but is soluble in the strongly acidic abomasum. Such polymers include polyvinylpyrrolidone, polyamides, and celluloses that have been chemically modified. This solution has the drawback of a high production cost, combined with the fact that using synthetic polymers introduces non-physiological substances into the animals' diet. Such polymer coating products thus require FDA approval.

A few patents disclose coating biologically active substances with material that allegedly survives the rumen but degrades in the abomasum.

For example, U.S. Patent No. 3,541,204 discloses hydrogenated vegetable and animal fats and waxes such as rice bran wax as coatings that survive the rumen but are disrupted in the intestinal tract.

U.S. Patent No. 3,959,493 describes utilizing aliphatic fatty acids having at least 14 carbon atoms each. The fatty acids are applied as a coating to an individual nutrient. The fatty acids are said to be resistant to rumen degradation. The active agents then are delivered to the abomasum and/or intestine where the fatty acids are reduced in the post-ruminal environment.

U.S. Patent No. 4,642,317 describes a process for supplying fatty acids to ruminants in the form of their calcium salts. However, the sole use of fatty acid salts as feed additives creates a distinctly disagreeable odor from the oxidation of the organic volatiles in the feed causing a reduction in feed intake and milk yield.

U.S. Patent No. 4,713,245 discloses a rumen-surviving granule comprising a core of bioactive material, a coating substance stable at neutral pH (as found in the rumen) but dissolved or disintegrated at pH=3 (as found in the abomasum), and at least one other coating selected from the group consisting of fatty acids having at least 14 carbon atoms and waxes, animal fat, and vegetable fat having a melting point of 40°C or higher.

U.S. Patent No. 4,808,412 describes a rumen stable composition containing an active agent molecularly dissolved with a basic polymer. The active agent is delivered post-ruminally because the polymer is resistant to a pH of greater than about 5, but is soluble or swellable at a pH of less than about 3.5. In this type of dispersion, some of the active agent at and near the surface of the composition will be destroyed by the action of ruminal microbes because cracks or channels can occur on the surface, reducing the effectiveness of the protection.

U.S. Patent No. 4,832,967 discloses a two-layer rumen-surviving coating for water-soluble bioactive substances. The resulting particulate is stable at pH at least as high as 5.5, and releases bioactive substance at pH of 3.5 or less. The coating medium comprises an inner first coating layer consisting of material sensitive to pH variations and an outer second coating layer consisting of a hydrophobic composition that must include inorganic filler if the bioactive core has not undergone a surface treatment (application of hydrophobic binder). This hydrophobic outer coating layer is provided with a texture that permits diffusion or penetration of the external liquid medium. The outer coating preferably contains a mixture of hydrophobic substances.

U.S. Patent No. 4,876,097 discloses a coating composition that is stable at pH less than or equal to about 3.5. The coating comprises a film-forming, water-insoluble binder that contains a substance that controls hydrophilicity, and optionally a substance that is sensitive to pH. Both waxes (hydrophobic) and propylene glycol (water-soluble) are suitable for controlling the hydrophilic/hydrophobic balance. Controlling the hydrophilicity of the particle is said to limit release of the bioactive material in neutral or slightly acidic media, i.e., in the rumen. In very acidic media, i.e., the abomasum, pH-sensitive fillers are activated by the media, which diffuses slowly at a rate established by the hydrophilicity of the coating. The resulting dissolution or swelling of the pH-sensitive filler degrades the coating and releases the bioactive material.

U.S. Patent No. 5,093,128 describes a beadlet nutrient coating that includes fats and calcium based products. Coated ruminant nutrients have the disadvantage of cracking or abrading either in handling or in being masticated by the animal.

U.S. Patent No. 5,145,695 provides a method wherein a particular feed composition that delivers an improved balance of essential amino acids post-ruminally is fed to a cow.

U.S. Patent No. 5,227,166 discloses a feed supplement for ruminants consisting of a coated biologically active substance, such as an amino acid, drug, or vitamin. The coating composition comprises lecithin, at least one inorganic substance which is stable in neutrality and soluble under acidic conditions, and at least one substance selected from the group consisting of straight-chain or branched-chain saturated or unsaturated monocarboxylic acids having 14 to 22 carbon atoms, salts thereof, hardened vegetable oils, hardened animal oils, and waxes.

U.S. Patent No. 5,496,571 discloses a method of encapsulating choline to produce a rumen bypass supplement for ruminants. This type of encapsulation produces spherical particles having a core of choline surrounded by a shell of fat. Encapsulation is a relatively expensive manufacturing process. Furthermore, the high degree of saturation of the fat needed for solidification tends to reduce the digestibility of the choline.

U.S. Patent No. 5,714,185 describes a scheme for treating protein substances with zein/formaldehyde to render the ingredients protected from rumen degradation. However, formaldehyde results in the destruction and reduced bioavailability of most essential amino acids. Broderick, G.A. et al., "Control of rate and extent of protein degradation," Physiological Aspects of Digestion and Metabolism in Ruminants, Tsuda et al., eds., p. 541, 1991; Academic Press, London. Furthermore, the level of formaldehyde sometimes used is too high, creating health concerns associated with its carcinogenicity and has not been approved by the FDA for animal feed applications.

U.S. Patent No. 5,807,594 describes a method of improving weight gain and feed efficiency in a ruminant by encapsulating a choline chloride composition in a rumen-protected carrier. Suitable encapsulating or coating materials for use in this invention include hydrogenated oils, mono- and di-glycerides, waxes, and seed fats.

U.S. Patent No. 6,022,566 describes the addition of fat to a feed ration and then adding rumen protected encapsulated choline chloride in an amount proportional to the added fat. However, such coatings and encapsulations of choline chloride are subject to abrasion, cracking, and other abuses during transport and handling, thereby rendering the coatings permeable to rumen fluids and microorganisms that destroy the choline.

U.S. Patent No. 6,229,031 describes a method for manufacturing feed supplements by converting lipids that are byproducts of the food and meat processing industries to their calcium salt form.

U.S. Patent No. 6,242,013 describes a ruminally-protected high oleic material produced by roasting oilseeds at high temperatures to protect the fatty acids fed to ruminants. However, the roasting procedures require costly energy consumption.

U.S. Patent Application Publication No. 2002/0127259 indicates that coated ruminant nutrients are disadvantageous due to cracking or abrading either in handling or in being masticated by the animal.

Japanese Laid-Open Patent Publication No. 60-168351 proposes a method of dispersing a biologically active substance in a protective substance which comprises granulating a biologically active substance containing at least 20% by weight of calcium carbonate and at least 10% by weight of a substance selected from the group consisting of monocarboxylic acid, a hardened oil and fat.

Japanese Laid-Open Patent Publication No. 61-195653 proposes a process for dispersing a biologically active substance in coating materials composed of at least 10% by weight of a substance selected from the group consisting of a monocarboxylic acid, a hardened oil and fat, and at least 20% by weight to not more than 50% by weight of an insoluble salt of an acid which is more weakly acidic than hydrochloric acid.

Japanese Laid-Open Patent Publication No. 63-317053 describes a method that comprises coating a biologically active substance with a coating material containing the protective substance composed of a monocarboxylic acid, hardened oil, lecithin, and a glycerin fatty acid ester.

WO 96/08168 describes a ruminant feedstuff to improve milk yields in dairy cattle. The feedstuff is composed of a rumen-protected choline compound having a protective coating containing at least one fatty acid or fatty acid soap.

Watanabe et al. (K. Watanabe et al., "Effects of fat coated rumen bypass lysine and methionine on performance of dairy cows fed a diet deficient in lysine and methionine," Animal Science Journal, 77:495-502, 2006) report that the present technology to produce rumen protected amino acids has been limited to methionine. Watanabe et al. further report on the significant challenges of developing a rumen protected lysine, due to its physical and chemical properties. Watanabe et al. also indicate that from an industrial point of view, it was only worthwhile establishing rumen protected technology with hydrogenated fat and/or minerals, which are already registered as feed ingredients. Watanabe et al. disclose the bioavailability of fat coated rumen protected L-lysine hydrochloride in lactating dairy cows and the effect of rumen protected L-lysine hydrochloride and rumen protected methionine on lactation performance of high-yielding dairy cows fed a silage-based practical diet. Watanabe et al. report that the intestinal availability of their fat coated rumen protected lysine was calculated to be 66.2%.

Documents US 5,720,970 and EP 1741347 disclose further amino acid containing feed for ruminants.

In view of the foregoing problems, the need still exists to provide a feed supplement that protects a biologically active substance stably in the rumen of a ruminant animal and yet allows the effective digestion and absorption in the abomasum and subsequent digestive tract of the active substance.

SUMMARY

The present disclosure addresses these and other needs by providing an improved composition containing a biologically active substance that can effectively be digested, absorbed, and utilized by ruminant animals while being a safe and economical product.

The present disclosure provides a ruminant feed composition, comprising a granulated core material comprising L-lysine sulfate and a hydrogenated vegetable oil coating material surrounding the core material with at least two or more layers.

The present disclosure provides a method of providing lysine to a ruminant, comprising providing L-lysine sulfate in a granular core coated with a coating material and including the coated granule in a feed that is fed to the ruminant.

DETAILED DESCRIPTION OF EMBODIMENTS

Embodiments herein relate to feed additives comprising a core that is coated with a coating material, which is stable in the rumen of a ruminant animal and is digested and absorbed in the abomasum and subsequent digestive tract.

Several active substances have been identified that aid in improving milk and meat production of ruminant animals, including the amino acids lysine and methionine. When used in dietary supplements, different salt forms of such amino acids may be utilized to supply the desired amino acid. For example, lysine may be in the form of lysine hydrochloride or lysine sulfate. In addition, the physical characteristics of the amino acid salt may range from very fine, almost powdery, to large granules. Therefore, the chemical and physical properties of the final product, and thus its ability to bypass the rumen and be effectively utilized by the ruminant animal, are directly related to the amino acid salt selected.

A preferred form of lysine is a granulated L-lysine sulfate having the following attributes. The particle size is preferably in the range of about 0.3 mm to about 3.0 mm, and more preferably is in the range of about 0.3 mm to about 1.0 mm, or in the range of about 1.0 mm to about 2.0 mm, or in the range of about 2.0 mm to about 3.0 mm, or in the range of about 0.3 mm to about 1.6 mm, or in the range of about 0.8 mm to about 1.2 mm. The lysine assay may be 50% minimum. The moisture content may be 5% maximum, and the bulk density may be 0.70 $\pm$ 0.07 grams/cc. Such a lysine product is commercially available as BIOLYS® manufactured by Evonik Corporation.

The coating materials for coating a core containing the active substance is a vegetable oil that is at least partially hydrogenated. Examples of suitable vegetable oils include palm oil, soybean oil, rapeseed oil, cottonseed oil, and castor oil.

The coating material should have a melting temperature in the range of from about 50°C to about 80°C, such as in the range of about 50°C to about 60°C, or in the range of about 60°C to about 70°C, or in the range of about 70°C to about 80°C, or in the range of about 55°C to about 65°C, or in the range of about 60°C to about 75°C, in order to ensure that the coating on the final product has a hard surface, thereby preventing agglomeration of the final product, and also to increase the stability of the product in the rumen.

The vegetable oil should be at least partially hydrogenated, or may be fully hydrogenated. In some embodiments, fully hydrogenated soybean oil is used as a coating material. Such a hydrogenated soybean oil is commercially available as Bunge Oil Soybean Flakes manufactured by Bunge, Ltd.

The core containing the active substance should be coated with a sufficient amount of coating material to completely coat the core and to obtain a rumen bypass rate of at least 50%, such as at least 55%, or at least 60%, or at least 65%. In other embodiments, the core is coated with a sufficient amount of coating material to obtain a rumen bypass rate of at least 70%, such as at least 75%, or at least 80%, or at least 85%. In yet other embodiments, the core is coated with a sufficient amount of coating material to obtain a rumen bypass rate of at least 88%, such as at least 90%, or at least 93%, or at least 96%. The "rumen bypass rate" is the percentage of the active substance contained in the core before entering the rumen that remains in the core upon exiting the rumen.

In embodiments, the weight percent ratio of the core to the coating material is in a range from about 50:50 to about 70:30, such as 50:50, or 55:45, or 60:40, or 65:35, or 70:30. In other embodiments, the weight percent ratio of the core to the coating material is in a range from about 70:30 to about 90:10, such as 75:25, or 80:20, or 85:15, or 90:10.

In addition to exhibiting a rumen bypass rate of at least 50%, the coated core material should also exhibit a sufficient intestinal digestibility rate. The "intestinal digestibility rate" is the percentage of the active substance passed from the rumen that is digested and absorbed in the abomasum and subsequent digestive tract. In embodiments, the intestinal digestibility rate is at least 80%, such as in the range of 80% to about 100%, or such as in the range of 80% to about 90%, or in the range of about 90% to about 100%, or in the range of about 85% to about 96%, or in the range of about 89% to about 95%, or in the range of about 93% to about 99%.

The core may be coated by spray coating, pan coating, fluid bed coating, continuous pour coating, or any other method known to those of skill in the art. This may be done in a batch or in a continuous process. The core is coated with multiple layers of coating material, such as, for example, 2, 3, 4, 5, 6, 7, 8, 9, or more layers. Each layer surrounding the core may independently comprise the same coating material or different coating materials.

When coating the core, the coating material may be heated to above its melting point temperature so that the coating material is in a liquid state when it is applied to the core. After application of the liquid coating material to the core, the coated core is allowed to cool so that the coating material solidifies forming a solid layer surrounding the core. This process is repeated one or more times to produce multiple layers of coating materials surrounding the core.

When consecutive layers of the same coating material are applied to the core as described above, the individual layers may not be distinguishable in the final product. However, the multilayering process described above imparts distinctive structural characteristics to the final product when compared to a product surrounded by a single layer of the same coating material having the same thickness as the coat of the multilayered product. While the liquid coating material is allowed to cool and solidify into a solid layer, defects such as micro-fissures, cracks, and pores may form in the layer. These defects can create paths for the ruminal environment to access and start degrading the core. Although any additional layers may also exhibit such defects, the defects in one layer may be offset by non-defect areas in a coating layer above or below and in direct contact with said one layer. Thus, by applying multiple layers of coating material to the core, where each layer is allowed to cool and solidify before forming the next layer, the number of defects that run continuously or create a path from the outer surface of the outermost layer to the core decreases.

The number and size of the defects in a layer may vary depending on the core size, coating materials, the coating process, and the process parameters utilized for making the coated core. As such, the number of layers and the thickness of each layer necessary to obtain a desired bypass rate and intestinal digestibility rate may vary depending upon the variables selected.

The coated core materials may then be used as a feed supplement or feed additive. Appropriate amounts of the coated granules are added to the ruminant feed, for example by mixing. When the feed supplement is ingested by the ruminant, the physiologically active substance is stably delivered past the rumen at a bypass rate as described above, such that a percentage of the active substance is delivered past the rumen for digestion and take up into the ruminant's system. In the case of lysine sulfate, the feed supplement should be added to the ruminant feed in an amount that would provide between about 5 to 120 grams of lysine sulfate per head of cattle per day.

## Example

300 grams of granulated lysine sulfate (BIOLYS®, Evonik Corporation), having granules with a diameter in a range of 0.3 mm to 1.6 mm, was heated by thermal conduction to 43°C, and then transferred to a low shear mixer. While agitating the lysine sulfate under low shear, 33% by volume of a pre-measured amount of hydrogenated soybean oil ($T_m$ = 49°C) heated to a temperature of 93°C was added to the mixer using continuous pour, coating the lysine sulfate. The product, while under agitation, was allowed to cool to 43°C. Hydrogenated soybean oil heated to a temperature of 93°C was again added until the product temperature reached 54°C, and the product, while under agitation, was allowed to cool to 43°C. The cycle was repeated once more, completing the addition of hydrogenated soybean oil. The final product had a 60% core to 40% coating by weight.

Approximately 10 grams of the test product was weighed into 5cm x 10cm bags (ANKOM #510, average pore size of 50±15 microns). Each bag was heat sealed twice. A total of 5 bags of the test product was prepared for each cow plus 4 blank bags. Each bag was labeled sequentially using a permanent marker and sample information was recorded on log sheets. A sample of the test product was collected and analyzed for initial dry matter (DM) and nitrogen (N) content.

Immediately before insertion into the rumen, the bags were soaked in 39°C water for approximately five minutes to wet the test material. The bags were then inserted into the rumen of three lactating Holstein cows previously fitted with rumen cannula. After an incubation period of 16 hours, the bags were removed from the rumen and immediately placed in ice water until they were washed three times. After washing, the bags were dried at 45°C. Once dry, each bag and its residue was weighed to determine the amount of dry matter (DM) and nitrogen (N) escaping ruminal degradation using the following formulas:

$$\%DM\ escape = \frac{mass\ of\ initial\ sample\ -\ mass\ of\ sample\ residue}{mass\ of\ initial\ sample} \times 100$$

$$\%N\ escape = \frac{mass\ of\ initial\ sample\ N\ -\ mass\ of\ residue\ N}{mass\ of\ initial\ sample\ N} \times 100$$

The rumen bypass rate (%DM escape) for the test product was 75.17% with a 2.85% standard deviation.

The intestinal digestibility rate was determined by an *in vitro* pepsin digestibility test. The protocol for the test was modified from the pepsin digestibility test for feedstuffs set forth in A.O.A.C. Reference #971.09, incorporated herein by reference, which is conducted with a 0.2 Normal pepsin solution. To determine the intestinal digestibility rate of the test product, a 0.0002 Normal pepsin solution was used. The intestinal digestibility rates of the lysine in the test product samples were 90-95%.

**Claims**

1. A ruminant feed composition, comprising:

   a granulated core comprising L-lysine sulfate and
   at least two or more layers of a coating material surrounding the core, wherein the coating material is a vegetable oil that is at least partially hydrogenated.

2. The composition of claim 1, wherein the vegetable oil is selected from the group consisting of palm oil, soybean oil, rape seed oil, cottonseed, and castor oil.

3. The composition of claim 1 or 2, wherein the granulated core material has a granular size of 0.3 mm to 3.0 mm.

4. The composition of any one of claims 1-3, wherein the weight % ratio of core material to coating material is from 50:50 to 90:10.

5. The composition of any one of claims 1-4, wherein the coating material has a melting temperature in the range of from 50°C to 80°C.

6. The composition of any one of claims 1-5, wherein the vegetable oil is soybean oil.

7. The composition of any one of claims 1-6, wherein the core is coated with a sufficient amount of coating material to obtain a rumen bypass rate of at least 50% and the composition exhibits an intestinal digestibility rate of at least 80%.

8. A method of supplementing the diet of a ruminant with lysine, the method comprising:

   providing the ruminant with a ruminant feed composition comprising:

   a granulated core material comprising at least L-lysine sulfate; and
   at least two or more layers of a hydrogenated vegetable oil coating material surrounding the core material.

9. The method of claim 8, wherein the vegetable oil is soybean oil.

10. A method of making a ruminant feed composition, the method comprising:

   obtaining a core comprising L-lysine sulfate;
   coating the core with a continuous layer of a coating material comprising liquid vegetable oil;
   allowing the layer of coating material to solidify to obtain a coated core; and
   surrounding the coated core with one or more additional layers of coating material, wherein each layer of coating material is allowed to solidify before adding a next layer of coating material.


**Patentansprüche**

1. Wiederkäuerfutterzusammensetzung, umfassend:

   einen granulierten Kern, der L-Lysin-Sulfat umfasst, und
   mindestens zwei oder mehrere Schichten eines den Kern umgebenden Mantelmaterials, wobei das Mantelmaterial zumindest ein teilweise hydriertes Pflanzenöl ist.

2. Zusammensetzung nach Anspruch 1, wobei das Pflanzenöl Palmöl, Sojabohnenöl, Rapsöl, Baumwollsamen- und/oder Rizinusöl ist.

3. Zusammensetzung nach Anspruch 1 oder 2, wobei das Granulatkernmaterial eine Korngröße von 0, 3 mm bis 3,0 mm aufweist.

4. Zusammensetzung nach einem der Ansprüche 1 bis 3, wobei das Gewichtsprozentverhältnis von Kernmaterial zu Mantelmaterial von 50:50 bis 90:10 geht.

**5.** Zusammensetzung nach einem der Ansprüche 1 bis 4, wobei das Mantelmaterial eine Schmelztemperatur im Bereich von 50°C bis 80°C aufweiset.

**6.** Zusammensetzung nach einem der Ansprüche 1 bis 5, wobei das Pflanzenöl Sojabohnenöl ist.

**7.** Zusammensetzung nach einem der Ansprüche 1 bis 6, wobei der Kern mit einer ausreichenden Menge an Mantelmaterial ummantelt ist, um eine Pansenbypassrate von mindestens 50% zu erhalten, und die Zusammensetzung ein intestinales Verdauungsverhältnis von mindestens 80% aufweist.

**8.** Verfahren zur Ergänzung der Ernährung eines Wiederkäuern mit Lysin, wobei das Verfahren umfasst:

Versehen des Wiederkäuers mit einer Wiederkäuerfutterzusammensetzung, die umfasst:

ein granuliertes Kernmaterial, das mindestens L-Lysin-Sulfat umfasst; und
mindestens zwei oder mehr Schichten eines hydrierten Pflanzenölmantelmaterials, das das Kernmaterial umgibt.

**9.** Verfahren nach Anspruch 8, wobei das Pflanzenöl Sojabohnenöl ist.

**10.** Verfahren zur Herstellung einer Wiederkäuerfutterzusammensetzung, wobei das Verfahren umfasst:

Erhalten eines Kerns, der L-Lysin-Sulfat umfasst;
Ummanteln des Kerns mit einer durchgehenden Schicht eines Mantelmaterials, das flüssiges Pflanzenöl umfasst;
Ermöglichen der Schicht des Mantelmaterials zu verfestigen, um einen ummantelten Kern zu erhalten; und
Umgeben des ummantelten Kerns mit einer oder mehreren Zusatzschichten von Mantelmaterial, wobei jeder Schicht von Mantelmaterial ermöglicht wird auszuhärten, bevor eine nächste Schicht von Mantelmaterial hinzugefügt wird.

## Revendications

**1.** Composition d'aliment pour ruminant, comprenant :

un noyau granulé comprenant du sulfate de L–lysine et
au moins deux couches ou plus d'un matériau d'enrobage entourant le noyau, dans laquelle le matériau d'enrobage est une huile végétale qui est au moins partiellement hydrogénée.

**2.** Composition de la revendication 1, dans laquelle l'huile végétale est choisie dans le groupe constitué de l'huile de palme, l'huile de soja, l'huile de colza, l'huile de coton, et l'huile de ricin.

**3.** Composition de la revendication 1 ou 2, dans laquelle le matériau de noyau granulé a une taille granulaire de 0,3 mm à 3,0 mm.

**4.** Composition de l'une quelconque des revendications 1 à 3, dans laquelle le rapport en % en poids du matériau de noyau au d'enrobage est de 50 : 50 à 90 : 10.

**5.** Composition de l'une quelconque des revendications 1 à 4, dans laquelle le matériau d'enrobage a une température de fusion dans la plage de 50 °C à 80 °C.

**6.** Composition de l'une quelconque des revendications 1 à 5, dans laquelle l'huile végétale est l'huile de soja.

**7.** Composition de l'une quelconque des revendications 1 à 6, dans laquelle le noyau est enrobé avec une quantité suffisante de matériau d'enrobage pour obtenir un taux de contournement du rumen d'au moins 50 % et la composition présente un taux de digestibilité intestinale d'au moins 80 %.

**8.** Procédé de supplémentation de l'alimentation d'un ruminant avec de la lysine, le procédé comprenant :

la fourniture au ruminant d'une composition d'alimentation pour ruminant comprenant :

un matériau de noyau granulé comprenant au moins du sulfate de L-lysine ; et
au moins deux couches ou plus d'un matériau d'enrobage d'huile végétale hydrogénée entourant le matériau de noyau.

9. Procédé de la revendication 8, dans lequel l'huile végétale l'huile de soja.

10. Procédé de fabrication d'une composition d'aliment pour ruminant, le procédé comprenant les étapes consistant à :

obtenir un noyau comprenant du sulfate de L-lysine;
enrober le noyau avec une couche continue d'un matériau d'enrobage comprenant l'huile végétale liquidé ;
laisser la couche de matériau d'enrobage solidifier pour obtenir un noyau enrobé ; et
entourer le noyau enrobé avec une ou plusieurs couches de matériau d'enrobage, chaque couche de matériau d'enrobage étant laissée à solidifier avant d'ajouter une couche suivante de matériau d'enrobage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3541204 A
- US 3959493 A
- US 4642317 A
- US 4713245 A
- US 4808412 A
- US 4832967 A
- US 4876097 A
- US 5093128 A
- US 5145695 A
- US 5227166 A
- US 5496571 A
- US 5714185 A
- US 5807594 A
- US 6022566 A
- US 6229031 B
- US 6242013 B
- US 20020127259 A
- JP 60168351 A
- JP 61195653 A
- JP 63317053 A
- WO 9608168 A
- US 5720970 A
- EP 1741347 A

### Non-patent literature cited in the description

- Control of rate and extent of protein degradation. **BRODERICK, G.A. et al.** Physiological Aspects of Digestion and Metabolism in Ruminants. Academic Press, 1991, 541
- **K. WATANABE et al.** Effects of fat coated rumen bypass lysine and methionine on performance of dairy cows fed a diet deficient in lysine and methionine. *Animal Science Journal,* 2006, vol. 77, 495-502